# EUROPEAN PATENT SPECIFICATION

(11) **EP 1 368 576 B1**
(45) Date of publication and mention of the grant of the patent: **15.09.2004**
(21) Application number: 02704936.0
(22) Date of filing: 08.03.2002
(51) Int. Cl.: F16D 65/092

(54) **FRICTION PAD**
REIBBELAG
PLAQUETTE DE FREIN

(30) Priority: 13.03.2001 GB 0106357
(43) Date of publication of application: 10.12.2003
(73) Proprietor: FEDERAL-MOGUL FRICTION PRODUCTS LIMITED, Manchester M22 5TN (GB)
(72) Inventor: PHILLIPS, Alan, Jeffrey, Buxton, Derbyshire SK17 9SW (GB)
(74) Representative: Hammersley, John
(86) International application number: PCT/GB2002/001055
(87) International publication number: WO 2002/073059

(56) References cited:
- DE-A- 19 840 065
- US-A- 4 762 214
- US-A- 5 538 108

## Description

The present invention relates to friction pads such as brake pads, brake shoes and clutch plates and particularly to such pads for vehicles, more particularly, but not exclusively, disc brake pads for railway vehicles.

Friction pads for the above mentioned uses are well known per se, being mounted between a relatively moving rubbing surface and an actuator for applying engagement force thereto in a direction towards the rubbing surface to effect reduction in said relative movement. In the case of a brake, the aim is, of course, to slow the rubbing surface which may comprise a curved periphery or a flat disc surface of a wheel by a friction pad shaped to conform to the rubbing surface. Although the invention described hereinafter is of particular relevance to railway vehicles and disc brakes therefor, it is not intended that the invention be limited to disc brakes pads for such vehicles.

Vehicle disc brake arrangements for road and rail vehicles are well known wherein, in general, a substantially flat pad carrying a layer of friction material is pressed into engagement with a rotating disc of steel or other material, and the differing requirements placed upon the brake pad design by different vehicle types is outlined in, for example, GB-A-2260176.

Existing forms of disc brake pads for railway vehicles are, for reasons associated with manufacture and handling, normally used in pairs and each of which comprises a generally arcuate, tapered shape, having at one face a layer of friction material and at the opposite face a trapezoidal-sectioned sole plate for slotting into a carrier coupled with the brake actuator. As explained in the above-mentioned patent specification, friction materials for railway use are generally hard and insofar as the pad area is large, there are conflicts in ensuring that the surface of the friction material engages properly and uniformly with the disc surface, that is, conforms.

Such a situation is identified in WO 95/07418 and a friction material defined that is based upon a thermoset resin incorporating at least 50% of a ceramic filler material in addition to other fillers and friction modifying components. Such material, which may conveniently be described as "a ceramic friction material" is capable of operating at extremely high brake surface temperatures, but is also both brittle and poorly conforming with respect to a brake disc surface against which it is pressed. Such brittleness and poor conformity are exacerbated in the relatively large pad areas encountered in railway brake pads.

Poor conformability may result in parts only of the friction material applying disproportionately large braking forces to small areas of the disc surface and resulting in bands around the disc at higher temperatures than elsewhere that can lead to poor frictional forces, uneven and premature wear of the pad and disc. Brittleness also renders the material layer as a whole susceptible to thermal and physical shocks which may result in cracking of the material and reduction in pad performance and/or operating life.

To mitigate such effects it is known to support the friction material by way of a relatively low modulus (or soft), force-transmitting elastomeric underlayer, and possibly additional interlayers. WO 97/2549 describes such a pad structure that addresses in part the problem of conformability, and it is known from this publication to create grooves or surface cuts extending to the underlayer such that the friction layer comprises, in effect, an array of blocks, or elements, of friction material mounted on such soft underlayer / back plate arrangement. However, notwithstanding such attention to improving conformability, it is found that the high temperatures that can be generated easily by such ceramic friction materials (and without excessive difficulty in others) during braking may have a detrimental effect on bonding between the layers and on the elastomeric materials of the underlayer and thus the structural integrity of the pad. Therefore, although friction materials, and particularly ceramic friction materials, can operate and effect braking efficiently at high temperatures and under high braking engagement loads per se, it has been necessary in practice to construct and operate brake pads containing them conservatively and without much incentive to maximise the braking efficiency of the friction material.

It is known from GB-A-527218 to have a back plate arrangement having a channel section partially closed by wall flanges overlying the back plate proper and into which channel can be slid a plurality of friction material blocks on a layer of elastomeric material by which brake engagement forces are transmitted between the back plate arrangement and blocks. Each block has a block flange adjacent the elastomeric material to engage with the wall flanges of the back plate to restrain the friction material blocks from lifting away from the back plate arrangement when unconstrained by the presence of the brake disc. Whereas this may point to less reliance on bonding between friction material and a resilient underlayer for pad integrity, it is a brake structure not sufficiently robust to be employed in railway braking nor with brittle friction materials, and does not offer a solution to the effects of high temperature on an elastomeric underlayer material.

An alternative approach has been to adopt a less brittle material, although one which is not free of its own constraints. It is known, for example, to employ a friction material made from sintered metallic material which although capable of operating a high temperatures and transmitting large engagement forces, is not at all conformable and requires to be presented to the rubbing surface in relatively small and individually alignable blocks or elements. Examples of railroad vehicle disc brake friction pads wherein poorly conformable sintered materials are employed in the form of individual, resiliently mounted friction elements , are shown in DE-U-8514607, US-A-4640390 and US-A-5538108. The first two of these each employs a sandwich arrangement of back plate overlaid by a spaced retaining plate against which flanged friction elements are biased by spring means, respectively in the form of individual springs or an intermediate plate having an array of resilient projections. Also, the sandwiched back plate structure requires a significant thickness which, if the overall thickness of the pad is defined for a particular use, results in smaller (shallower) friction elements and thus shorter working life. This is to some extent mitigated by the ability to pre-stress the spring means so that friction element displacement only occurs for large forces and is thus somewhat restricted. Nevertheless, such complex structures require precision manufacturing to permit relative movement between component parts and in the exposed and hostile environment of vehicle braking individual friction elements may be subject to jamming and acquire all of the disadvantages associated with becoming non-conformable, which provides the starting point for US-A-5538108. This takes a different approach and rejects complexity of construction in favour of mounting individual sintered friction elements on flat resilient plates secured to, but standing off from, a simple back plate as resiliently deflectable cantilevers. Each friction element is mounted at a free end of a resilient plate that is able to move to and from the back plate by deflection along its length as dictated by transmission of braking engagement forces and any unevenness in the rubbing surface contacted. Although the construction is clearly much less complex than the others, it will be appreciated that each plate is deflected from zero stress until it counters the braking engagement force transmitted thereby, and for significant braking engagement forces significant deflection of each plate may be required. This not only requires displacement of the elements and supporting plates from the back plate by an amount which may eliminate any advantage over the sandwich constructions in terms of friction element length but also causes each friction element to incline with respect to the back plate as the supporting plate deflects so that uneven wear of the friction elements appears possible.

DE-A-19 840 065 discloses a friction pad according to the pre-amble of claim 1.

The carrier design of the friction pad comprises guiding apertures for the friction blocks.

Although such criteria are most clearly manifested in the particularly extreme conditions obtaining or the dimensions, forces and preferred materials associated with disc brakes of railway vehicles, it will be appreciated that such questions of conformability and high temperatures are applicable to some extent in any of the above mentioned friction pads and it is an object of the present invention to provide a friction pad construction that provides superior conformability and heat tolerance than known arrangements. It is also an object of the present invention to provide a disc brake pad by such friction pad.

According to the present invention a friction pad for mounting between a relatively moving rubbing surface and an actuator for applying engagement force thereto in a direction towards the rubbing surface to effect reduction in said relative movement, comprises a back plate having a first side for the application of engagement force thereto and a second side, a plurality of discrete friction elements extending from the second side, each element having a rubbing end arranged to bear on the rubbing surface and a forcing end arranged to have said engagement force applied thereto by the back plate arrangement along an engagement force axis extending substantially longitudinally therethrough, said friction elements being supported with respect to the back plate by metallic support means, resiliently deflectable with respect to the first side of the back plate, and operable to transmit engagement force applied to the first side of the back plate to the friction element and to exert bias force on the friction element opposing displacement thereof towards the back plate, and characterised in that the spring means comprises for each friction element a single, uniquely associated support spring finger of sheet metal having spaced apart along a longitudinal finger axis first and second end regions joined by an integral central region, said first end region being disposed at the surface of the back plate, said second end region extending substantially parallel to the first end region and supporting the friction element restrained with respect thereto in respect of displacement at least along the engagement force axis, said central region extending between the first and second end regions inclined acutely with respect to the back plate to effect separation of the second end region from the back plate and being resiliently deflectable at least adjoining the first and second end regions to permit recoverable displacement of said second end region towards the back plate.

In this specification the terms 'brake engagement force' and its truncated form 'engagement force' mean the force applied to the pad and exerted in a direction towards the rubbing surface and perpendicular to the direction of rubbing surface motion. In relation to a disc brake, the rubbing surface comprises the brake disc surface. The term 'friction generated force' means the force applied to the pad by the rubbing surface and exerted in the direction of rubbing surface motion. The terms "along the back plate" means in the direction of rubbing surface motion relative to the back plate.

Embodiments of the invention will now be described by way of example with references to the accompanying drawings, in which:
Figure 1(a) is a plan view of a first embodiment of a friction pad comprising a disc brake pad for a railway vehicle and conforming to UIC 541-3 OR dimensions and constructed in accordance with the present invention,
Figure 1(b) is a side view of the pad of Figure 1(a),
Figure 2(a) is a sectional elevation through a part of the pad of Figure 1 (a) along the line 2a-2a thereof, illustrating two of a plurality of friction elements supported on a back plate by metallic support means in the form of support spring fingers overlying the back plate,
Figure 2(b) is a plan view of the friction element and support of Figure 2(a) in the direction 2b-2b thereof,
Figure 3 is a sectional elevation through a part of a second embodiment of disc brake pad illustrating a different construction of friction element,
Figures 4(a) and 4(b) are sectional elevation and plan views respectively of part of a third embodiment of disc brake pad including a further construction of friction element and support means therefor, the plan view of Figure 4(b) being along the direction 4b-4b of Figure 4(a),
Figure 5(a) is a sectional elevation through one part of a fourth embodiment of disc brake pad showing half of a paired friction element and support spring finger similar to that of Figure 2(a) but showing the support spring finger inclined more steeply with respect to the back plate and associated friction element also inclined,
Figure 5(b) is a sectional elevation through the other half of the pair showing a wedge member clamped against the support spring fingerto effect pre-stressing deformation thereof,
Figure 6 is a sectional elevation through part of a fifth embodiment of disc brake pad showing a modified form of restraining of the friction element with respect to the support spring finger and a recess in the back plate,
Figure 7 is a sectional elevation through part of a sixth embodiment of disc brake pad showing a further form of friction element container and different form of restraining of the friction element with respect to the support spring finger and a recess in the back plate,
Figures 8 and 9 are sectional elevations through parts of seventh and eighth embodiments respectively of disc brake pad and similar to those of Figures 2(a) and 7 but in which the support means is formed from the back plate by deformation thereof, and
Figures 10(a) and 10(b) are front and side views respectively of a ninth embodiment of the present invention showing a brake shoe having a back plate with a cylindrically curved second side from which extend discrete resiliently mounted and restrained friction elements.

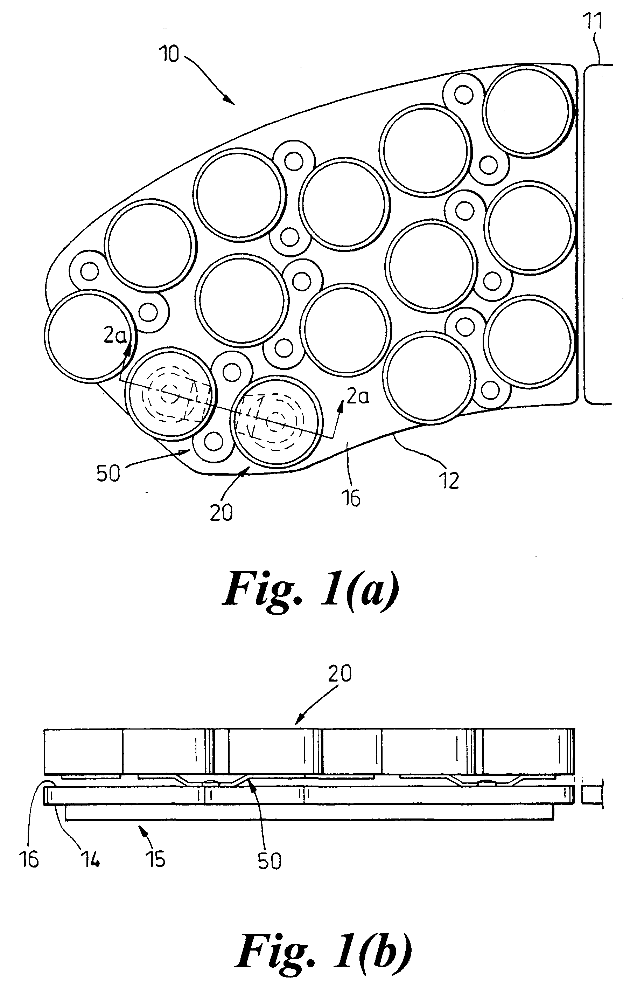

Referring to Figures 1(a) and 1(b) a disc brake pad 10 comprises a UIC shape employed in railway vehicles, and wherein such pad is employed with a complementary shape, mirror image pad 11 shown only in part, as a complementary pair. Each pad comprises a back plate 12 having a first side, indicated generally at 14 for the application of brake engagement force thereto by way of a dovetail-section mounting rail 15, and a second side, indicated generally at 16, from which extends a plurality of discrete friction elements 20ᵢ, where i = fourteen in the embodiment shown. The friction elements 20ᵢ are preferably, but not essentially, identical for simplicity of manufacture, not only of the elements themselves but also of the back plate 12. Accordingly, for simplicity of description, only one friction element will be described herein in detail, as element 20 .

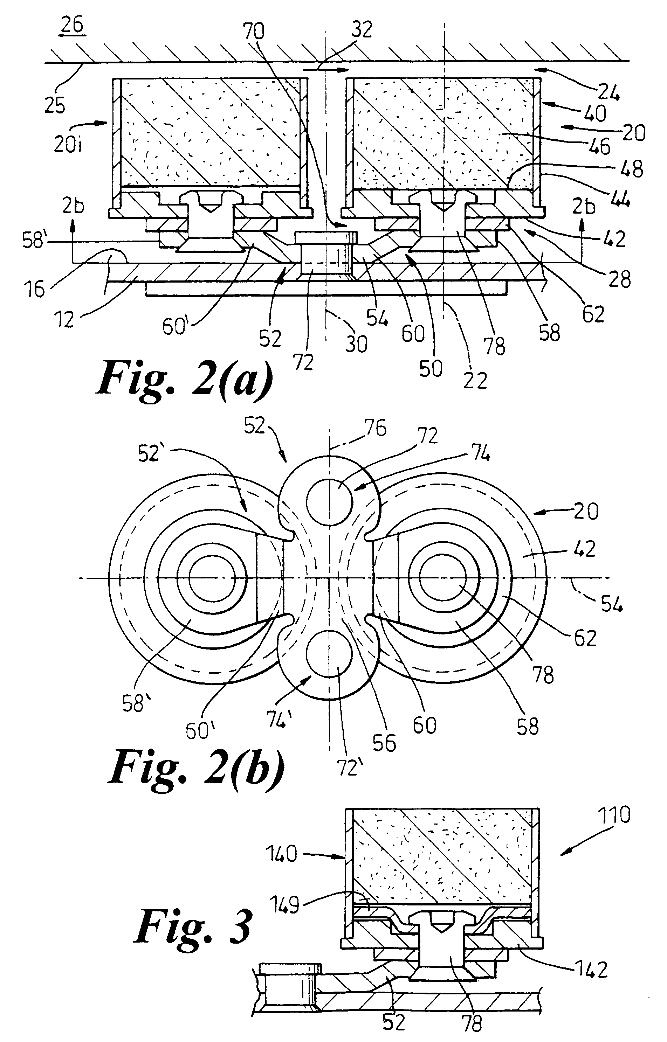

Referring also to Figures 2(a) and 2(b), the friction element 20 is generally circular in cross section with respect to a central longitudinal axis 22 thereof and extends along the axis in generally cylindrical form. The element has a rubbing end 24, adapted to bear on the a rubbing surface 25 of a wheel brake disc 26, and opposite thereto a forcing end 28, supported on, and arranged to have said engagement force applied by, the back plate along an engagement force transmitting axis 30 parallel to the longitudinal axis 22. Friction generated forces resulting from the rubbing end bearing on the disc rubbing surface 25 act in a direction 32 perpendicular to the engagement force axis 30, or in the terminology of this specification, in a direction along the back plate.

The friction element 20 comprises a container 40 defining the boundary of the element between its rubbing end 24 and forcing end 28, comprising a base 42 at the forcing end from which a side wall 44 extends towards the rubbing end, within which is confined a body of friction material 46.

The friction material is a ceramic friction material of the form described in WO 95/07148 and whereas the material is known to generate high temperature and exhibit poor conformability over extensive surfaces, resilient mounting of smaller, discrete bodies not affected by heat generated during braking, addresses disadvantages found hitherto in using such friction material. However, other friction material compositions may be used, resin-based or otherwise.

The container sidewall 44 extends for the full length of the friction material body and protects the edges of the body from impact damage and effectively provides improved hoop strength that resists cracking of the friction material due to pressure concentrating asperities of the disc surface. The container side wall is of copper or copper alloy which is easily eroded by the rubbing surface of the brake disc with the friction material. The container may comprise, as shown, discrete tubular side wall and circular base joined together by brazing or the like such that the base comprises floor 48 of the container. The base and tubular side wall may be of different materials but preferably they are of the same material to mitigate thermal stresses at the join. The body is retained in the container by being bonded to the floor 48 and/or the side wall 44.

In this embodiment, the shape and periphery dimensions of the back plate arrangement are assembled to comply with UIC standards. Having determined upon the use of elements that are, within manufacturing tolerances, identical dimensionally and materially, that is, have the same shape and dimensions and employing the same materials as each other, as well as a circular cross-section that is most favourable in manufacturing accuracy and cost, there is a trade-off between maximising conformability and providing adequate surface area to engage the brake disc. In this embodiment, for a UIC 541-3 OR dimensioned pad it is preferred to employ friction elements 20 having a container side wall of outside diameter of between 30 mm and 40 mm, preferably 36mm, and wall thickness of about 1mm [to 1.5mm], that is a friction material body diameter of 34mm. In relation to the overall area of the back plate arrangement being 209 cm² each of the ten elements has a friction material surface area that is less than 5% of the total pad area, more precisely 4.34%, and fourteen elements 60.8% of the total pad area.

Clearly, it is possible to vary the number of elements employed as well as the individual dimensions, and it will be appreciated that it is possible to have elements of different cross sectional shapes and/or dimensions and/or friction materials at different parts of the pad to make better use of the pad space available but at greater manufacturing complexity and cost.

The floor 48 of the container 40 is spaced from the forcing end of the friction element by a number of structural items, by which it is supported and restrained, as described further below.

The friction element 20 is supported with respect to the back plate by metallic support means, indicated generally at 50, which is resiliently deflectable with respect to the first side of the back plate and operable to transmit engagement force applied to the first side of the back plate to the friction element and to exert bias force on the friction element opposing displacement thereof towards the back plate, and by restraining means, indicated generally at 70, which is operable to restrain each friction element individually with respect to the back plate from displacement away from the back plate and displacement along the back plate. In this embodiment the restraining means includes the metallic support means 70, in that the element 20 is restrained with respect to the support means and the support means is itself restrained with respect to the back plate. The metallic support means comprises for the friction element 20 a single, uniquely associated support spring finger 52 of sheet metal having a longitudinal finger axis 54 along which are spaced apart first and second end regions 56, 58 respectively joined by an integral central region 60. The first end region is disposed at, and conforms to, the surface of the second side 16 of the back plate. The second end region 58 extends substantially parallel to the first end region and supports the friction element 20 with respect thereto to effect transmission of brake energising force on axis 30 by way of said first end region and central region to element axis 22, and to effect restraining means in respect of displacement towards the back plate. The central region 60 extends between the first and second end regions inclined acutely with respect to the first end region to effect separation of the second end region from the back plate and is resiliently deflectable with respect to the first and second end regions to permit recoverable displacement of said second end region towards the back plate. In particular, the central region and end regions are deflectable where they join to permit displacement of the friction element in a direction along the axis 22 with minimal change in orientation.

In this embodiment which relates to a disc brake pad having a flat back plate, the support spring finger 52 comprises a metal sheet of uniform thickness; the first and second end regions are substantially flat and parallel and the central region is also substantially flat and extends at a substantially uniform angle of inclination with respect to the first end region, and this, the second side of the back plate, an inclination of about 30° being found suitable.

In addition to the central region 60 being substantially uniform in thickness between the first and second end regions, it also reduces progressively in width from the second end region to the first end region, as seen more clearly in Figure 2(b).

The second end region 58 has, except where it joins the central region, a substantially circular periphery corresponding to, but smaller than, the base of the friction element 20 it supports. A load spreading washer 62 is disposed between the friction element base and the second end region of the support spring finger, having a cross sectional area less then than that of the friction element base but greater than that of the second end region.

As mentioned above, the restraining means 70 includes the support means 50 and for the friction element 20 this comprises the support spring finger 52. The support spring finger is disposed with the first end region 56 in overlying abutment with the surface 16 of the back plate at its second side thereof and is secured to the back plate by at least one fastening member 72, such as a rivet or screw, and in this embodiment by a pair of fastening members 72 and 72' extending through the first end region 56 at a pair of fastening locations 74 and 74' spaced apart along a fastening axis 76 extending substantially perpendicular to the finger axis 54.

The friction element restraining means comprises, at the forcing end of the friction element, restraining member 78, in the form of a rivet, screw or the like, extending along the longitudinal axis 22 through the base of container 40 and an aperture in the second end region 58 of the support spring finger, as well as any intervening components such as the load spreading washer 62, to secure the friction element to the finger in respect of relative motion in any direction by clamping the components with respect to each other and the floor of the container.

In use, a brake energising force is applied by way of rail 15 to the back plate 12 in the direction of axis 30, which force displaces (if necessary) the pad such that the rubbing end 24 of each friction element is forced against the relatively moving disc surface 25 and thereafter is transmitted by way of the support spring finger 52 which tends to deflect until the restoring force exerted by the finger on the friction element is substantially equal to the applied brake energising force.

Insofar as each of the friction elements 20, is similarly, and independently, sprung, any particular brake energising force applied to the back plate enables the friction elements to reach abutment with the disc by way of small differences in individual support spring finger deflections that effectively creates conformity between the friction material, as spread amongst the elements, and the disc. Whereas any inequality between support spring fingers, friction element or washer dimensions or the presence of rubbing surface high spot may initially deflect a particular friction element to a greater extent than the others, and thereby create a greater bias force, that friction element may be expected to wear at an accelerated rate until the bias force falls to the same level as the others.

The support spring finger 52 comprises a sheet or plate of carbon steel of such thickness and length that it has considerable stiffness to deflection, even where desired, but also resilience to deflection within small limits at the elevated temperatures found in vehicle braking arrangements. The material BS970 En2 has been found suitable. The support spring finger 52 may be dimensioned such that it offers high initial resistance to deflection in order to remain within its elastic limits for energising forces beyond those normally experienced by the braking system or for the forcing end of the friction element (or second end region of the finger) to abut the back plate in the case of excessive forces before the elastic limit of the support spring finger is exceeded.

It will be seen from Figures 2(a) and 2(b) that spaced apart fastening locations 74 and 74' in the first end region 54 of the support spring finger permit the finger to be secured to the back plate with its uniquely associated friction element already attached, and furthermore, the friction element is to one side of the first end region permitting the first end region to be common to, and provide the first end region of, a further support spring finger 52' having second end and central regions 58' and 60' respectively defined along finger axis 54 common to them both. A friction element 20ᵢ, identical with element 20, is supported on the second end region 58'.

Insofar as the common first end region is secured clamped against the back plate 12 there is no crosstalk transmission of different finger deflection forces between the paired fingers. However, if desired, the common first end region 54 may be secured with respect to the back plate to permit a degree of 'rocking' about the fastening axis 76 such that the associated pair of friction elements are able to define their working dispositions with respect to the braking surface 25 by displacement of both of the first and second end regions of the support spring finger relative to the back plate.

It will be appreciated that a number of variations may be made. As indicated above, the friction element has a container for the friction material with a tubular side wall that is relatively soft and easily abraded. This is not essential as the side wall may be of a harder material that is present in a lesser amount, such as a thinner wall and/or one of a mesh or apertured structure which is readily abraded. Also, mention is made of the possibility of difficulty in bonding certain friction materials to a container floor formed by a base of copper material. Referring to Figure 3, this shows in sectional elevation a portion of a second embodiment of disc brake pad 110 in accordance with the present invention, in particular a back plate 12 and support spring finger 52 as described above to which is attached a friction element 120. The friction element 120 is generally similar to the element 20 and identical parts are given the same reference numbers. It differs in that the friction element comprises a container 140 having a base 142 of copper or copper alloy but the floor 148 is formed not by the base of the container but by a plate 149 of a different material, such as steel, to which the friction material is more readily and securely bonded. The floor plate is mechanically secured with respect to the base by the fastening member 78, which clamps it thereto, or by any other conventional means.

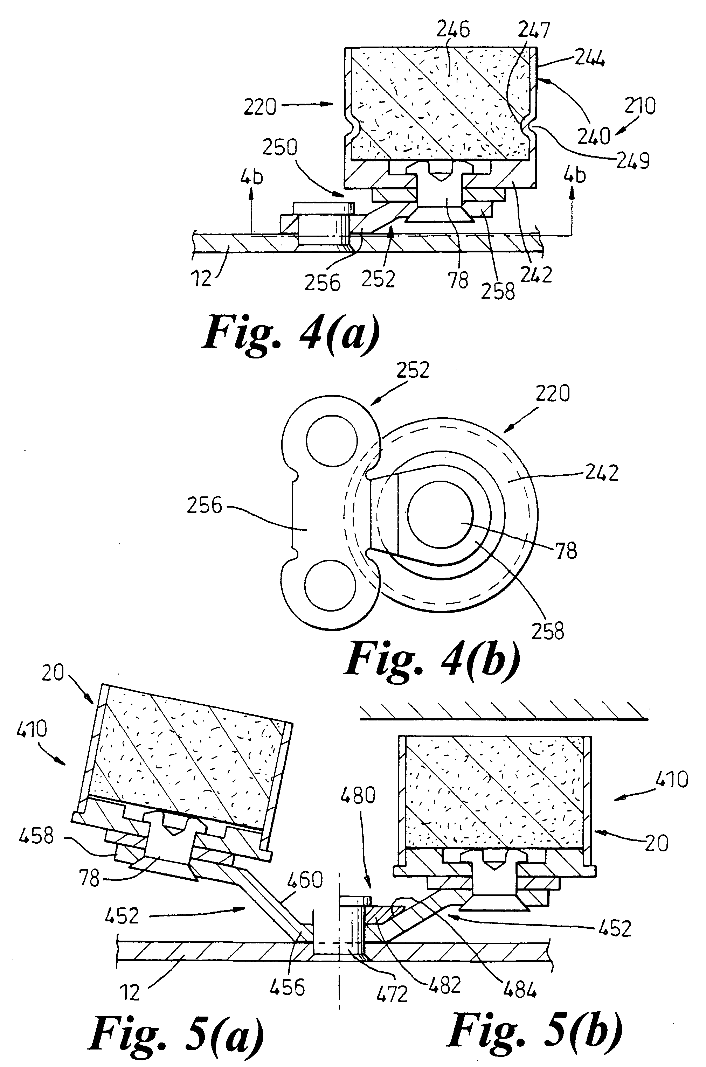

Referring now to Figure 4(a), a third embodiment of disc brake pad is shown in part at 210 comprising a further variation on the construction of friction element, indicated at 220. Parts identical to those described above are not described further but given the same reference numbers. The friction element 220 comprises a friction material container 240 differing from container 40 in that the base 242 and side wall 244 are integrally formed into a cup from a single metal piece by drawing or extrusion. If the material is copper or copper alloy having poor bonding properties, a floor plate (not shown) similar to 149 may be secured thereto by infiltrating the copper into pores or apertures of such plate during formation of the cup, or by fastening means 78. Also, as shown , the friction material 246 is optionally provided with one or more circumferentially extending recesses 247 in the side wall and mechanically interlocked with respect to the container by deformation of the container side wall 244 into the recess or recesses at 249.

It will be appreciated that the friction material may be retained in the cup by either one or both of bonding and mechanical interlocking. Also, such mechanical interlocking may be employed with the container structures 40 or 140.

The disc brake pad embodiment 210 illustrates not only a particular construction of friction element but also of support means 250 by which it is supported with respect to the back plate 12. Referring also to Figure 4(b), which shows a plan view from the back plate in direction 4b-4b, the support means 250 comprises, associated with friction element 220 a support spring finger 252 having first and second end regions 256 and 258 separated by central region 260. The support spring finger 252 is similar to the support spring finger 52 but with the first end region uniquely part of the finger and not common to, nor shared with, a further support spring finger. It will be appreciated that any of the friction element forms described above may be supported in this way.

In all of the above described embodiments it will be appreciated that notwithstanding the stiffness of each support spring finger in resisting deflection, such resistance is a function of the current deflection such that initially there is a tendency for the finger to commence deflection at relatively low levels of applied brake energising force and require the second end region to be offset from the back plate by a greater amount than is desirable in order to continue deflecting with high energising forces and not abut the back plate. Referring to Figures 5(a) and 5(b), these show schematically a fourth embodiment of disc brake pad 410. Again, components identical to those shown above are not described again but are given the same reference numbers. As shown in Figure 5(a), the friction element support means comprises for each friction element 20 a support spring finger 454 having a first end region 456 secured to the back plate 12, a second end region 458 on which the friction element is mounted and a central region 460 joining them. The central region is formed to have a natural inclination with respect to the first end region such that with the first end region in overlying abutment with the back plate the second end region is inclined with respect to the first end region and back plate. As shown in figure 5(b), pre-stressing means 480 is provided in the form of a wedge member 482 arranged to overlie the first end region 456 of the support spring finger and clamped with respect to the back plate by fastening member 472. The wedge member has an inclined edge 484 arranged to bear on at least part of the central region 460 of the support spring finger and force the central region to such inclination that aligns the second end region with the back plate and friction element rubbing end with respect to the brake disc rubbing surface 25. Operation is as described above except that the friction element is displaced by deflection of the support spring finger only in response to a braking engagement force in excess of the force exerted by the pre-stressing means.

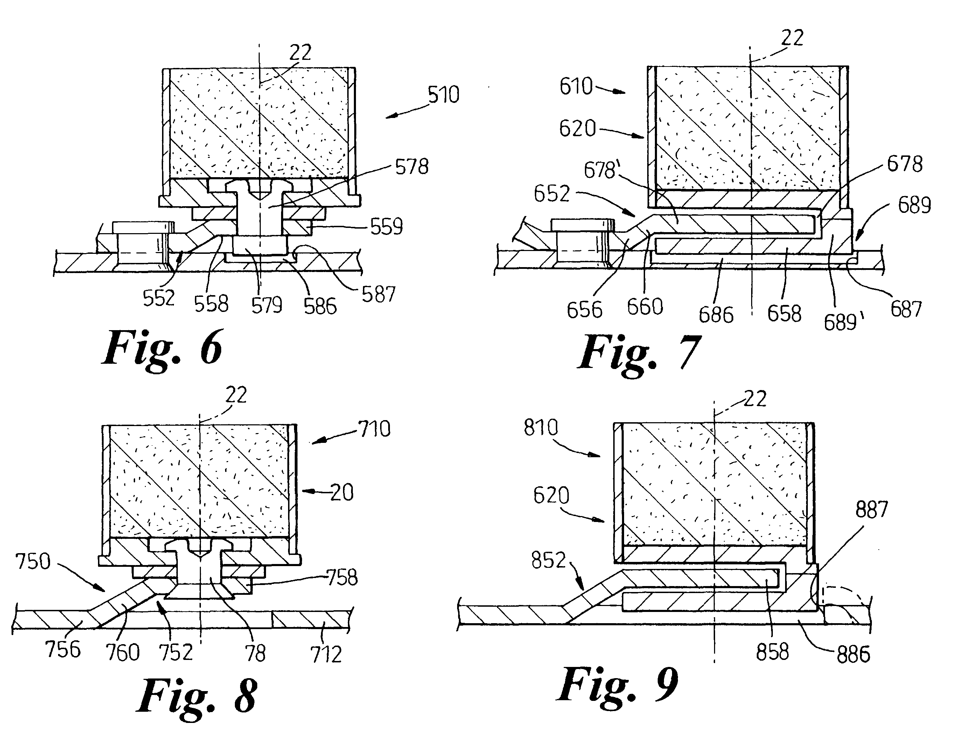

Referring now to Figure 6, this shows part of a fifth embodiment of disc brake pad 510 in accordance with the present invention, being similar to that of Figure 2(a) except that the back plate 12 includes in line with each friction element a recess operable to receive at least upon deflection of the friction element towards back plate, at least a part of the forcing end of the friction element and/or the second end region of the support spring finger. Friction element 20 is supported on support spring finger 552. The forcing end 28 of the friction element has a fastening member 578 which secures the friction element with respect to the second end region 558 of the support spring finger 552 and extends along the longitudinal axis 22 to an enlarged head 579 contained in part in a back plate recess 586 having boundary wall 587. The second end region of the support spring finger has a slot 559 through which the fastening member 578 extends, the enlarged head preventing displacement of the element in a direction away from the back plate but not in a direction along it; however, the head 579 is arranged to abut the recess boundary wall to prevent displacement of the friction element in that direction.

It will understood that the nature of the engagement force levels, operating temperature and space for displacement require each support spring finger to be very stiff and heat tolerant. As discussed above, these properties may be found in carbon steel not specifically of the type normally employed for a spring function. However, if desired other metals more usually associated with providing springs may be used or less associated, such as mild steel, provided operation can be assured within elastic limits.

Referring to Figure 7, this shows part of a sixth embodiment of disc brake pad 610, similar to the pad 510 insofar as the the friction element 620 is restrained with respect to the second end region 658 of the support spring finger 652 only in respect of displacement towards and away from the back plate and the back plate has for each friction element 620 a recess 686 with boundary wall 687 to prevent displacement of the friction element in a direction along the back plate. Friction element restraining means 678 comprises a lateral aperture 678' in the forcing end of the friction element, more particularly the base 642 of container 640, operable to receive said second end region 658 of the support spring finger in a direction along the back plate and inhibit displacement of the friction element away from the first side of the back plate but not, absent a fastening number such as 78, in a direction along the back plate. The restraining means does comprise a bearing part 689 arranged bear upon the recess boundary wall 687 to inhibit displacement of the friction element along the back plate. The bearing part may comprise the base of the container itself or, particularly if the base is a readily abraded material, a separate bearing member, secured to the base, that is the same or softer than the recess wall, that is, not harder than the back plate, such that it defines at least a peripheral portion 689' of the container adjacent the recess wall.

Referring to Figure 8, this shows a seventh embodiment of disc brake pad 710 in which the support means for the friction elements 20ᵢ comprises, associated with each element, a unique support spring finger 752 that is formed by back plate 712 which has spring fingers 752 each defined by deflection out of the plane of plate.

The first end region of the support spring finger is formed at the second side of the back plate and the second end regions 758 and central region 760 by cutting and deflecting a tongue of the back plate. The second end region extends substantially parallel to the plane of the back plate, and thus the first end region, and supports thereon friction element 20. The second end region is apertured and the friction element secured by fastening means 78 as described above.

Figure 9 shows part of an eighth embodiment of disc brake pad 810 which combines the friction element form 620 with support spring finger 852 which is integral with the back plate and formed by punching out a tongue defining a displaced second end region 858 which is located within a lateral passage in the base of the friction element. Insofar as the second end region is defined by its formation creating an aperture 886 in the back plate, an aperture boundary wall 887 is disposed to prevent displacement of the bearing 689 of the friction element.

It will be appreciated that if desired, and as shown by broken lines in the Figure, that part of the back plate defining the aperture boundary wall may be deflected at the same time as the support spring finger to align differently with a bearing member of the friction element.

It is particularly a feature of this embodiment that there is no separate support spring finger overlying the back plate, thereby saving not only on materials and assembly costs but also permitting, for any overall pad thickness specified, a greater thickness of friction material exposed to wear.

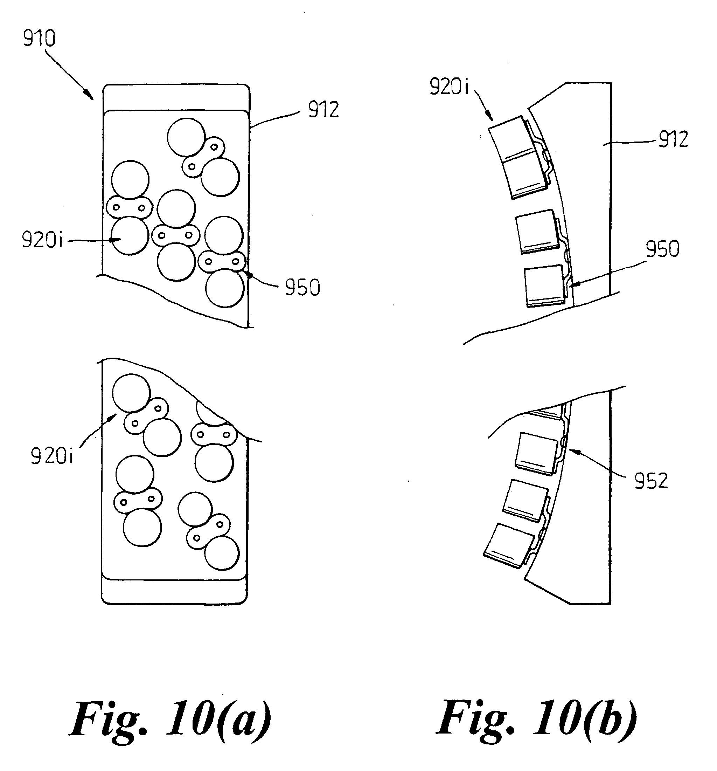

Although each of the above embodiments has been in relation to a substantially flat disc brake pad, the same structural techniques may be applied to a cylindrically curved brake shoe employed in tread or drum brakes. Referring to Figures 10(a) and 10(b), these show side and front (or plan) views respectively of a sixth embodiment of brake shoe 910 in the form of a cylindrically curved brake shoe 910, the friction surface of which is provided by a plurality of friction elements 920ᵢ arrayed across that side of the shoe back plate 912 facing the rubbing surface (not shown) and supported with respect thereto by support means 950. Insofar as the shoe is composed of a number of discrete, and possibly identical, friction elements, support spring fingers 952 and restraining means, the structure may correspond to that described above with the exception of curvature of the back plate. The discrete friction element and spring finger construction in accordance with the present invention facilitates any variation in spring characteristics and/or element friction characteristics arising from applying brake engagement forces in a particular direction not necessarily perpendicular to the back plate at all positions thereon.

Although embodiments have been described with reference to railway vehicles, it is re-iterated that a brake pad in accordance with the present invention is not, nor should be construed as, limited by size, shape or materials to such vehicle. Likewise, it is re-iterated that a friction pad having the array of friction elements and spring structures described above is not, nor should be construed as, limited to a brake pad.

## Claims

1. A friction pad (10) for mounting between a relatively moving rubbing surface (25) and an actuator for applying engagement force thereto in a direction towards the rubbing surface to effect reduction in said relative movement, comprising
a back plate (12) having a first side (14) for the application of engagement force thereto and a second side (16),
a plurality of discrete friction elements (20ᵢ) extending from the second side, each element having a rubbing end (24) arranged to bear on the rubbing surface and a forcing end (28) arranged to have said engagement force applied thereto by the back plate arrangement along an engagement force axis (22) extending substantially longitudinally therethrough, said friction elements being supported with respect to the back plate by metallic support means (50), resiliently deflectable with respect to the first side of the back plate, and operable to transmit engagement force applied to the first side of the back plate to the friction element and to exert bias force on the friction element opposing displacement thereof towards the back plate, and
**characterised in that** the metallic support means (50) comprises for each friction element a single, uniquely associated support spring finger (52; 752) of sheet metal having spaced apart along a longitudinal finger axis (54) first and second end regions (56, 58; 756, 758) joined by an integral central region (60; 760),
said first end region being disposed at the surface of the back plate,
said second end region extending substantially parallel to the first end region and supporting the friction element restrained with respect thereto in respect of displacement at least along the engagement force axis,
said central region extending between the first and second end regions inclined acutely with respect to the back plate to effect separation of the second end region from the back plate and being resiliently deflectable at least adjoining the first and second end regions to permit recoverable displacement of said second end region towards the back plate.

2. A friction pad as claimed in claim 1 **characterised in that** the central region (60) is substantially flat and extends at substantially uniform angle of inclination with respect to the second side of the back plate.

3. A friction pad as claimed in claim 1 or claim 2 **characterised in that** the central region (60) reduces progressively in width from the second end region (58) to the first end region (56).

4. A friction pad as claimed in any one of the preceding claims **characterised in that** at least one support spring finger (52) is secured to the back plate in overlying abutment with the surface of the back plate.

5. A friction pad as claimed in claim 4 **characterised in that** the first end region (56) of the support spring finger is common to, and comprises the first end region of, a further support spring finger (52') having central and second end regions (60', 58') defined along a common finger axis (54).

6. A friction pad as claimed in claim 4 or claim 5 **characterised by** pre-stressing means (480) fixed with respect to the back plate, arranged to overlie the first end region (456) of the support spring finger and at least part of the central region (460) and operable to force the central region to assume said predetermined acute inclination such that the second end region (458) and supported friction element is displaceable only in response to an engagement force in excess of said force exerted by the pre-stressing means.

7. A friction pad as claimed in any one of the preceding claims wherein each friction element comprises a container (40, 140, 240) of friction material (46, 246) having a base (42, 142, 242) at the forcing end from which a side wall comprising copper or copper alloy extends towards the rubbing end, the side wall surrounding the friction material and adapted to be eroded away with the friction material and the base providing a container floor (48, 149) on which the friction material sits.

8. A friction pad as claimed in any one of the preceding claims wherein each friction element comprises a container (40, 140, 240) of friction material (46, 246) having a base (42, 142, 242) at the forcing end from which a side wall extends towards the rubbing end, the side wall surrounding the friction material and adapted to be eroded away with the friction material and the base providing a container floor (48, 149) on which the friction material sits, and friction element restraining means (78) comprising at the forcing end (28) thereof fastening means (78) extending along the engagement force axis (22) through the base of the container and second end region (58) of the associated support spring finger, operable to secure the friction element to the support spring finger against displacement relative thereto.

9. A friction pad as claimed in claim 8 **characterised in that** the area of the second region (58) of the support spring finger supporting the associated friction element is smaller than the cross sectional area of the associated friction element.

10. A friction pad as claimed in any one of the preceding claims **characterised in that** the second side (16) of the back plate includes a recess (586; 686; 886) operable to receive at least upon deflection of the friction element towards back plate, at least a part of the forcing end of the friction element and/or the second end region of the support spring finger.

11. A friction pad as claimed in any one of the preceding claims wherein each friction element comprises a container (40, 140, 240) of friction material (46, 246) having a base (42, 142, 242) at the forcing end from which a side wall extends towards the rubbing end, the side wall surrounding the friction material and adapted to be eroded away with the friction material and the base providing a container floor (48, 149) on which the friction material sits, and the second side of the back plate includes a recess (686; 886) operable to receive, at least upon deflection of the friction element (620) towards back plate, at least a part of the forcing end of the friction element, there being provided friction element restraining means comprising a lateral aperture (678) in the forcing end of the friction element operable to receive, in a direction along the back plate, said second end region (658; 858) of the support spring finger and inhibit displacement of the friction element away from the first side of the back plate, and a bearing part (689) arranged bear upon a wall of the recess to inhibit displacement of the friction element along the back plate.

12. A friction pad as claimed 11 **characterised in that** the bearing part of each friction element comprises a bearing member secured with respect to the container to define a peripheral portion thereof (689') adjacent the recess wall.

13. A friction pad as claimed in any one of the preceding claims **characterised in that** at least one friction element (20) includes friction material (146) comprising a thermoset resin containing at least 50% of a ceramic filler material.

14. A friction pad as claimed in any one of the preceding claims **characterised in that** some of the friction elements are different from others in cross sectional dimension.

15. A friction pad as claimed in any one of the preceding claims **characterised in that** the central region (60) of the support spring finger (52) is arranged to deflect such that the second end region remains substantially parallel to the first end region (56).

16. A disc brake pad for a railway vehicle comprising a friction pad as claimed in any one of the preceding claims in which the back plate (12) is substantially planar.

17. A disc brake pad as claimed in claim 16 **characterised in that** each friction element has at its rubbing end a friction material surface dimensioned to occupy between 1.5% and 6% of the area defined by the back plate.

## Patentansprüche

1. Reibbelag (10) zur Montage zwischen einer Reibfläche (25) und einem Betätigungsorgan, die sich relativ zueinander bewegen, zum Aufbringen einer Eingriffskraft auf diesen in einer Richtung zur Reibfläche hin, um eine Verringerung der Relativbewegung zu bewirken, mit
einer Rückplatte (12), die eine erste Seite (14) zum Aufbringen einer Eingriffskraft auf diese, und eine zweite Seite (16) aufweist,
einer Vielzahl getrennter Reibelemente (20ᵢ), die von der zweiten Seite aus verlaufen, wobei jedes Element ein Reibende (24), das dazu eingerichtet ist, sich auf der Reibfläche abzustützen, und ein druckseitiges Ende (28) aufweist, das dazu eingerichtet ist, die durch die Rückplattenanordnung aufgebrachte Eingriffskraft entlang einer Eingriffskraftachse (22) einwirken zu lassen, die im wesentlichen in Längsrichtung durch jene hindurchläuft, wobei die Reibelemente gegenüber der Rückplatte durch metallische Stützmittel (50), die relativ zur ersten Seite der Rückplatte federnd verbiegbar sind, abgestützt und so betätigbar sind, daß sie eine auf die erste Seite der Rückplatte aufgebrachte Eingriffskraft auf das Reibelement übertragen und eine Vorspannkraft auf das Reibelement ausüben, die entgegen dessen Verschiebung zur Rückplatte hin wirkt, und
**dadurch gekennzeichnet, daß** das metallische Stützmittel (50) für jedes Reibelement einen einzelnen, ihm allein zugewiesenen Stützfederfinger (52; 752) aus Metallblech umfaßt, der in einem Abstand entlang einer Finger-Längsachse (54) angeordnete erste und zweite Endbereiche (56, 58; 756, 758) aufweist, die über einen integrierten Mittelbereich (60; 760) zusammengefügt sind,
wobei der erste Endbereich an der Oberfläche der Rückplatte angeordnet ist,
der zweite Endbereich im wesentlichen parallel zum ersten Endbereich verläuft und das relativ zu diesem arretierte Reibelement gegen eine Verschiebung zumindest entlang der Eingriffskraftachse abstützt,
wobei der Mittelbereich zwischen dem ersten und zweiten Endbereich relativ zur Rückplatte spitzwinkelig verläuft, um eine Trennung des zweiten Endbereiches von der Rückplatte zu bewirken, und zumindest benachbart dem ersten und zweiten Endbereich federnd verbiegbar ist, um eine reversible Verschiebung des zweiten Endbereichs zur Rückplatte hin zu gestatten.

2. Reibbelag nach Anspruch 1, **dadurch gekennzeichnet, daß** der Mittelbereich (60) im wesentlichen eben ist und unter einem im wesentlichen gleichbleibenden Neigungswinkel relativ zur zweiten Seite der Rückplatte verläuft.

3. Reibbelag nach Anspruch 1 oder Anspruch 2, **dadurch gekennzeichnet, daß** die Breite des Mittelbereiches (60) vom zweiten Endbereich (58) zum ersten Endbereich (56) hin laufend abnimmt.

4. Reibbelag nach einem der vorhergehenden Ansprüche, **dadurch gekennzeichnet, daß** mindestens ein Stützfederfinger (52) an der Rückplatte, gegen die Oberfläche der Rückplatte anlaufend und diese überlappend, befestigt ist.

5. Reibbelag nach Anspruch 4, **dadurch gekennzeichnet, daß** der erste Endbereich (56) des Stützfederfingers dem ersten Endbereich eines weiteren Stützfederfingers (52') gemeinsam ist und diesen beinhaltet, wobei der weitere Stützfederfinger (52') einen Mittelbereich und einen zweiten Endbereich (60', 58') aufweist, die entlang einer gemeinsamen Fingerachse (54) festgelegt sind.

6. Reibbelag nach Anspruch 4 oder Anspruch 5, **gekennzeichnet durch** Vorspannmittel (480), die relativ zur Rückplatte fixiert und so angeordnet sind, daß sie den ersten Endbereich (456) des Stützfederfingers und zumindest einen Teil des Mittelbereiches (460) überdecken, und so betätigbar sind, daß sie den Mittelbereich dazu bringen, die vorbestimmte spitzwinkelige Neigung anzunehmen, so daß der zweite Endbereich (458) und das abgestützte Reibelement nur als Reaktion auf eine Eingriffskraft verschiebbar sind, die größer als die von den Vorspannmitteln ausgeübte Kraft ist.

7. Reibbelag nach einem der vorhergehenden Ansprüche, wobei jedes Reibelement einen Behälter (40, 140, 240) für Reibmaterial (46, 246) umfaßt, der eine Basis (42, 142, 242) am druckseitigen Ende aufweist, von der aus eine Kupfer oder eine Kupferlegierung umfassende Seitenwand zum Reibende hin verläuft, wobei die Seitenwand das Reibmaterial umgibt und dazu eingerichtet ist, mit dem Reibmaterial abgetragen zu werden, und die Basis einen Behälterboden (48, 149) bildet, auf dem das Reibmaterial sitzt.

8. Reibbelag nach einem der vorhergehenden Ansprüche, wobei jedes Reibelement einen Behälter (40, 140, 240) für Reibmaterial (46, 246), der eine Basis (42, 142, 242) am druckseitigen Ende aufweist, von der aus eine Seitenwand zum Reibende hin verläuft, die das Reibmaterial umgibt und dazu eingerichtet ist, mit dem Reibmaterial abgetragen zu werden, und die Basis einen Behälterboden (48, 149) bildet, auf dem das Reibmaterial sitzt, und Reibelement-Haltemittel (78) umfaßt, die an dessen druckseitigem Ende (28) Befestigungsmittel (78) aufweisen, welche entlang der Eingriffskraftachse (22) durch die Basis des Behälters und den zweiten Endbereich (58) des zugeordneten Stützfederfingers hindurchlaufen und die so wirksam sind, daß sie das Reibelement am Stützfederfinger gegen eine Verschiebung relativ zu diesem befestigen.

9. Reibbelag nach Anspruch 8, **dadurch gekennzeichnet, daß** die Fläche des zweiten Bereichs (58) des Stützfederfingers, welcher das zugeordnete Reibelement abstützt, kleiner als die Querschnittfläche des zugeordneten Reibelementes ist.

10. Reibbelag nach einem der vorhergehenden Ansprüche, **dadurch gekennzeichnet, daß** die zweite Seite (16) der Rückplatte eine Ausnehmung (586; 686; 886) umfaßt, die so betätigbar ist, daß sie zumindest bei einer Biegung des Reibelementes zur Rückplatte hin wenigstens einen Teil des druckseitigen Endes des Reibelementes und/oder den zweiten Endbereich des Stützfederfingers aufnimmt.

11. Reibbelag nach einem der vorhergehenden Ansprüche, wobei jedes Reibelement einen Behälter (40, 140, 240) für Reibmaterial (46, 246), der eine Basis (42, 142, 242) am druckseitigen Ende aufweist, von der aus eine Seitenwand zum Reibende hin verläuft, wobei die Seitenwand das Reibmaterial umgibt und dazu eingerichtet ist, mit dem Reibmaterial abgetragen zu werden, und die Basis einen Behälterboden (48, 149) bildet, auf dem das Reibmaterial sitzt, und die zweite Seite (16) der Rückplatte eine Ausnehmung (686; 886) umfaßt, die so betätigbar ist, daß sie zumindest bei einer Biegung des Reibelementes (620) zur Rückplatte hin wenigstens einen Teil des druckseitigen Endes des Reibelementes aufnimmt, wobei Reibelement-Haltemittel mit einer seitlichen Öffnung (678) im druckseitigen Ende des Reibelementes, die so betätigbar sind, daß sie in einer Richtung entlang der Rückplatte den zweiten Endbereich (658; 858) des Stützfederfingers aufnehmen, und ein Lagerteil (689) vorgesehen sind, das zum Abstützen auf einer Wand der Ausnehmung eingerichtet ist, um eine Verschiebung des Reibelementes entlang der Rückplatte zu verhindern.

12. Reibbelag nach Anspruch 11, **dadurch gekennzeichnet, daß** das Lagerteil jedes Reibelementes ein Lagerelement umfaßt, das relativ zum Behälter so befestigt ist, daß es einen Umfangsabschnitt desselben (689') benachbart der Ausnehmungswand festlegt.

13. Reibbelag nach einem der vorhergehenden Ansprüche, **dadurch gekennzeichnet, daß** mindestens ein Reibelement (20) Reibmaterial mit einem wärmegehärteten Harz aufweist, das keramisches Füllmaterial in einem Anteil von mindestens 50% enthält.

14. Reibbelag nach einem der vorhergehenden Ansprüche, **dadurch gekennzeichnet, daß** einige der Reibelemente sich hinsichtlich ihrer Querschnittsabmessung von anderen unterscheiden.

15. Reibbelag nach einem der vorhergehenden Ansprüche, **dadurch gekennzeichnet, daß** der Mittelbereich (60) des Stützfederfingers (52) dazu eingerichtet ist, sich so zu biegen, daß der zweite Endbereich im wesentlichen parallel zum ersten Endbereich (56) bleibt.

16. Scheibenbremsenbelag für ein Schienenfahrzeug, umfassend einen Reibbelag nach einem der vorhergehenden Ansprüche, bei dem die Rückplatte (12) im wesentlichen eben ist.

17. Scheibenbremsenbelag nach Anspruch 16, **dadurch gekennzeichnet, daß** jedes Reibelement an seinem Reibende eine Reibmaterialfläche aufweist, die so bemessen ist, daß sie 1,5% bis 6% der durch die Rückplatte festgelegten Fläche einnimmt.

## Revendications

1. Plaquette de friction (10) pour montage entre une surface de frottement relativement en déplacement (25) et un organe de commande pour appliquer une force d'engagement sur celle-ci selon une direction dirigée vers la surface de frottement pour réaliser une réduction dans ledit mouvement relatif, comprenant
une plaque arrière (12) ayant un premier côté (14) pour l'application de la force d'engagement dessus et un second côté (16),
une pluralité d'éléments de friction discrets (20ᵢ) s'étendant du second côté, chaque élément ayant une extrémité de frottement (24) arrangée pour porter sur la surface de frottement et une extrémité en force (28) arrangée pour avoir ladite force d'engagement appliquée dessus par l'arrangement de plaque arrière le long d'un axe de force d'engagement (22) s'étendant sensiblement longitudinalement à travers, lesdits éléments de friction étant supportés par rapport à la plaque arrière par des moyens de support métalliques (50), orientables de manière résistante par rapport au premier côté de la plaque arrière, et aptes à transmettre la force d'engagement appliquée au premier côté de la plaque arrière à l'élément de friction et à exercer une force en biais sur l'élément de friction s'opposant au déplacement de celui-ci en direction de la plaque arrière, et
**caractérisée en ce que** les moyens de support métalliques (50) comprennent pour chaque élément de friction un simple doigt de diaphragme de support associé de manière unique (52 ; 752) de tôle, ayant espacé dessus, le long de l'axe du doigt longitudinal (54), des première et seconde régions finales (56, 58 ; 756, 758) jointes par une région centrale entière (60 ; 760),
ladite première région finale étant disposée sur la surface de la plaque arrière,
ladite seconde région finale s'étendant sensiblement de manière parallèle à la première région finale et supportant l'élément de friction retenu par rapport à celle-ci eu égard au déplacement d'au moins le long de l'axe de la force d'engagement,
ladite région centrale s'étendant entre les première et seconde régions finales inclinées de manière aiguë par rapport à la plaque arrière pour réaliser la séparation de la seconde région finale de la plaque arrière et étant orientable de manière résistante au moins en étant en contact des première et seconde régions finales pour permettre un déplacement récupérable de ladite seconde région vers la plaque arrière.

2. Plaquette de friction selon la revendication 1, **caractérisée en ce que** la région centrale (60) est sensiblement plate et s'étend selon un angle d'inclinaison sensiblement uniforme par rapport au second côté de la plaque arrière.

3. Plaquette de friction selon l'une des revendications 1 ou 2, **caractérisée en ce que** la région centrale (60) se réduit progressivement en largeur de la seconde région finale (58) vers la première région finale (56).

4. Plaquette de friction selon l'une des revendications précédentes, **caractérisée en ce qu'**au moins un doigt de diaphragme support (52) est fixé à la plaque arrière par une butée chevauchante avec la surface de la plaque arrière.

5. Plaquette de friction selon la revendication 4, **caractérisée en ce que** la première région finale (56) du doigt de diaphragme support est commun à, et comprend la première région finale, d'un doigt de diaphragme support (52') ayant des régions centrale et seconde finales (60', 58') définies le long d'un axe de doigt commun (54).

6. Plaquette de friction selon la revendication 4 ou 5,**caractérisée par** des moyens de précontraintes (480) fixés par rapport à la plaque arrière, arrangés pour chevaucher la première région finale (456) du doigt de diaphragme support et d'au moins une partie de la région centrale (460) et apte à forcer la région centrale à prendre une inclinaison aiguë prédéterminée de manière telle que la seconde région finale (458) et l'élément de friction supporté soient déplaçables seulement en réponse à une force d'engagement en excès de ladite force exercée par les moyens de précontrainte.

7. Plaquette de friction selon l'une des revendications précédentes, **caractérisée en ce que** chaque élément de friction comprend un conteneur (40, 140, 240) d'une substance de friction (46, 246) ayant une base (42, 142, 242), sur l'extrémité en force à partir de laquelle une paroi latérale comprenant du cuivre ou un alliage de cuivre s'étend en direction de l'extrémité de frottement, la paroi latérale entourant la substance de friction et étant adaptée pour se désagréger avec la substance de friction et la base fournissant un plancher de conteneur (48, 149) sur lequel la substance de friction s'assoit.

8. Plaquette de friction selon l'une des revendications précédentes, **caractérisée en ce que** chaque élément de friction comprend un conteneur (40, 140, 240) de substance de friction (46, 246) ayant une base (42, 142, 242) à l'extrémité en force à partir de laquelle une paroi latérale s'étend en direction de l'extrémité de frottement, la paroi latérale entourant la substance de friction et étant adaptée pour se désagréger avec la substance de friction et la base fournissant un plancher de conteneur (48, 149) sur lequel la substance de friction s'assoit, et les moyens de retenu de l'élément de friction (78) comprenant sur l'extrémité en force (28) de celui-ci des moyens de fixation (78) s'étendant le long de l'axe de force d'engagement (22) à travers la base du conteneur et la seconde région finale (58) du doigt de diaphragme de support associé, apte à fixer l'élément de friction sur le doigt de diaphragme de support par rapport au déplacement relatif à celui-ci.

9. Plaquette de friction selon la revendication 8, **caractérisée en ce que** la zone de la seconde région (58) du doigt de diaphragme support supportant l'élément de friction associé est plus petit que la zone en section transversale de l'élément de friction associé.

10. Plaquette de friction selon l'une des revendications précédentes, **caractérisée en ce que** le second côté (16) de la plaque arrière inclut un repli (586, 686, 886) apte à recevoir au moins lors de la déviation de l'élément de friction en direction de la plaque arrière, au moins une partie de l'extrémité en force de l'élément de friction et/ou de la seconde région finale du doigt de diaphragme support.

11. Plaquette de friction selon l'une des revendications précédentes, **caractérisée en ce que** chaque élément de friction comprend un conteneur (40, 140, 240) de substance de friction (46, 246) ayant une base (42, 142, 242) à l'extrémité en force à partir de laquelle une paroi latérale s'étend en direction de l'extrémité de frottement, la paroi latérale entourant la substance de friction et étant apte à être désagrégée avec la substance de friction et la base fournissant un plancher de conteneur (48, 149) sur lequel la substance de friction s'assoit, et le second côté de la plaque arrière inclut un repli (686, 886) apte à recevoir, au moins lors de la déviation de l'élément de friction (620) en direction de la plaque arrière, au moins une partie de l'extrémité en force de l'élément de friction, et étant prévu des moyens de retenu de l'élément de friction comprenant une ouverture latérale (678) dans l'extrémité en force de l'élément de friction apte à recevoir, dans une direction le long de la plaque arrière, ladite seconde région finale (658, 858) du doigt de diaphragme support et à inhiber le déplacement de l'élément de friction en dehors du premier côté de la plaque arrière, et une partie de support (689) arrangée pour supporter une paroi du repli pour inhiber le déplacement de l'élément de friction le long de la plaque arrière.

12. Plaquette de friction selon la revendication 11, **caractérisée en ce que** la partie de support de chaque élément de friction comprend un élément de support fixé par rapport au conteneur pour définir une partie périphérique de celui-ci (689') adjacente à la paroi de repli.

13. Plaquette de friction selon l'une des revendications précédentes, **caractérisée en ce qu'**au moins un élément de friction (20) inclut une substance de friction (146) comprenant une résine thermodurcie contenant au moins 50% d'une substance de remplissage en céramique.

14. Plaquette de friction selon l'une des revendications précédentes, **caractérisée en ce que** certains des éléments de friction sont différents des autres selon la dimension en section transversale.

15. Plaquette de friction selon l'une des revendications précédentes, **caractérisée en ce que** la région centrale (60) du doigt de diaphragme support (52) est arrangée pour se dévier de manière telle que la seconde région finale reste sensiblement parallèle à la première région finale (56).

16. Plaquette de frein à disque pour un véhicule de chemin de fer comprenant une plaquette de friction selon l'une des revendications précédentes dans laquelle la plaque arrière (12) est sensiblement planaire.

17. Plaquette de frein à disque selon la revendication 16, **caractérisée en ce que** chaque élément de friction a à son extrémité de frottement une surface de substance en friction dimensionnée pour occuper entre 1,5% et 6% de la zone définie par la plaque arrière.
